# EUROPÄISCHE PATENTSCHRIFT

(11) **EP 1 814 376 B1**
(45) Veröffentlichungstag und Bekanntmachung des Hinweises auf die Patenterteilung: **30.07.2008**
(21) Anmeldenummer: 06776421.7
(22) Anmeldetag: 26.07.2006
(51) Int. Cl.: A01B 61/04

(54) **ÜBERLASTSICHERHEITSEINRICHTUNG FÜR LANDWIRTSCHAFTLICHE GERÄTE**
OVERLOAD PROTECTION DEVICE FOR AGRICULTURAL APPLIANCES
DISPOSITIF DE SECURITE ANTI-SURCHARGE POUR OUTILS AGRICOLES

(30) Priorität: 03.08.2005 DE 102005037098
(43) Veröffentlichungstag der Anmeldung: 08.08.2007
(73) Patentinhaber: Amazonen-Werke H. Dreyer GmbH & Co. KG, 49205 Hasbergen (DE)
(72) Erfinder: TIESSEN, Reimer, Uwe, 26135 Oldenburg (DE); POKRIEFKE, Michael, 27798 Hude (DE); ALTMANN, Stefan, 04209 Leipzig (DE); SOSNICKI, Jürgen, 04209 Leipzig (DE); REINKE, Wilfried, 26123 Oldenburg (DE)
(74) Vertreter: Grünecker, Kinkeldey, Stockmair & Schwanhäusser Anwaltssozietät
(86) Internationale Anmeldenummer: PCT/EP2006/007364
(87) Internationale Veröffentlichungsnummer: WO 2007/014682

(56) Entgegenhaltungen:
- AU-A- 4 782 979
- DE-A1- 10 313 179
- GB-A- 2 045 041
- US-A- 4 609 051
- US-A- 5 427 183

## Beschreibung

Die Erfindung betrifft eine Überlastsicherheitseinrichtung für landwirtschaftliche Geräte gemäß des Oberbegriffes des Patentanspruches 1.

Eine derartige Überlastsicherheitseinrichtung ist beispielsweise durch die DE 103 13 179 A1 bekannt. Diese Überlastsicherheitseinrichtung ist für ein als Grubber ausgebildetes Bodenbearbeitungsgerät vorgesehen. Diese Überlastsicherheitseinrichtung gestattet ein dreidimensionales Ausweichen des Zinkens beim Auftreffen auf in dem Boden sich befindlichen Hindernissen. Somit kann also das Bodenbearbeitungswerkzeug sowohl seitlich wie nach oben ausweichen. Die Ausgestaltung der Überlastsicherheitseinrichtung ist robust und für relativ schwere Geräte ausgebildet.

Der Erfindung liegt die Aufgabe zugrunde, eine einfache und preiswerte Überlastsicherheitseinrichtung zu schaffen, welche es gestattet, dass das Bodenbearbeitungswerkzeug sowohl seitlich wie auch nach oben ausweichen kann.

Diese Aufgabe wird erfindungsgemäß durch das kennzeichnende Merkmal des Patentanspruches 1 gelöst. Im Gegensatz zum Stand der Technik wird die Hauptreaktionskraft vom Bodeneingriff des Bodenbearbeitungswerkzeuges in den Boden direkt in die untere Abstützanordnung eingeleitet, so dass die Federanordnung nicht die gesamte vom Eingriff des Bodenbearbeitungswerkzeuges in den Boden herrührenden Zugkräfte aufnehmen muss. Vielmehr werden durch diese Anordnung die Kräfte unmittelbar in die untere Abstützanordnung eingeleitet. Weiterhin kann das Bodenbearbeitungswerkzeug beim Ausweichen nach hinten, wenn es auf in dem Boden sich befindliche Hindernisse auftrifft, um die durch den Gelenkbolzen verlaufende Gelenkachse verschwenkt werden. Gleichzeitig kann das Bodenbearbeitungswerkzeug auch seitlich ausweichen, weil aufgrund der V- oder U-förmig im Querschnitt ausgebildeten unteren Gelenkaufnahme die sich auf dem Gelenkbolzen abstützt, die Gelenkaufnahme sich vom Gelenkbolzen abheben, damit das Bodenbearbeitungswerkzeug seitlich ausweichen kann.

Um eine möglichst geringe Flächenpressung im Zusammenwirken der Gelenkaufnahme und des Gelenkbolzens zu erreichen, ist vorgesehen, dass die V- oder U-förmige Gelenkaufnahme sich über die Länge des Gelenkbolzens erstreckt.

Beim seitlichen Ausweichen und zurückfedern des Bodenbearbeitungswerkzeuges hat sich gezeigt, dass es vorteilhaft ist, dass die V- oder U-förmige Gelenkaufnahme zwei trichterförmig zueinander angeordnete Gelenklagerflächen mit an den Gelenkbolzen angepasst gerundete Schwenklagerflächen aufweist.

Eine einfache Ausgestaltung der unteren Abstützanordnung lässt sich dadurch erreichen, dass die V- oder U-förmige Gelenkaufnahme zwei beabstandet zueinander angeordnete sich auf dem Gelenkbolzen abstützende gabelförmige Elemente aufweist.

Um die Kräfte besonders vorteilhaft in die untere Abstütz- und Gelenkaufnahmeanordnung einleiten zu können, ist vorgesehen, dass die Gelenkaufnahme dem am Bodenbearbeitungswerkzeug zugeordneten Gelenkteil und der Gelenkbolzen dem am Traggestell angeordneten Gelenkteil zugeordnet ist.

Eine vorteilhafte Federanordnung lässt sich dadurch erreichen, dass zwischen dem Traggestell und der oberen Abstützanordnung die die Federbelastung erzeugende Federanordnung angeordnet ist.

Anstelle einer offenen und nur einseitig ausgebildeten V- oder U-förmigen im Querschnitt ausgebildeten Gelenkaufnahme kann die Gelenkanordnung auch langlochähnlich ausgebildet sein, wobei in vorteilhafter Weise die Längserstreckung der langlochähnlichen Aufnahme zumindest dem zweifachen Durchmesser des Gelenkbolzens entspricht. Als vorteilhaft hat sich herausgestellt, dass der oberen Abstützanordnung zumindest ein Dämpfungselement zugeordnet ist, so dass nach dem Überwinden des im Boden sich befindlichen Hindernisses durch das Bodenbearbeitungswerkzeug die obere Abstützanordnung des Bodenbearbeitungswerkzeuges gedämpft gegen die Halterung schlägt.

Das Dämpfungselement ist als elastische Platte beispielsweise bestehend aus Polyurethan oder Gummi ausgebildet.

Eine einfache Ausbildung der Überlastsicherungseinrichtung, die in einfacher Weise am Traggestell zu befestigen ist, lässt sich dadurch schaffen, dass die Überlastsicherheitseinrichtung ein am Traggestell anordbares und ein von seiner zumindest annähernd horizontalen Oberseite gebildeten Befestigungsbereich aufweisendes Halterungselement aufweist, dass an dem Halterungselement die Abstützanordnungen mit dem Bodenbearbeitungswerkzeug und die Federlast erzeugende Federeinrichtung angeordnet ist.

Um zu erreichen, dass das Bodenbearbeitungswerkzeug in einer Querreihe in zwei Zwischenquerreihen in einfacher Weise am Traggestell in gestaffelter Weise angeordnet werden kann, ist vorgesehen, dass der Befestigungsbereich des Halterungselementes sich in Fahrtrichtung über eine größere Länge als in Querrichtung erstreckt.

Um das Halterungselement in einfacher Weise in optimaler Weise am Traggestell in Bezug zum benachbarten Bodenbearbeitungswerkzeug anordnen zu können, ist vorgesehen, dass das Halterungselement mehrere hintereinander liegende Befestigungsbereiche aufweist.

Eine sehr flexible und an jeder Stelle des Traggestelles ermöglichende Anordnung der Überlastsicherungseinrichtung des Bodenbearbeitungswerkzeuges lässt sich dadurch verwirklichen, dass die gesamte Überlastsicherheitseinrichtung mit Bodenbearbeitungswerkzeug und Gelenkteilen unterhalb des Traggestelles angeordnet ist.

Eine unabhängige und vorteilhafte Ausgestaltung des Traggestelles des Bodenbearbeitungsgerätes, unabhängig von der Ausgestaltung der Bodenbearbeitungswerkzeuge und dem Befestigungsbereich des Überlastsicherheitseinrichtung der Bodenbearbeitungswerkzeuge am Traggestell lässt sich dadurch verwirklichen, dass die Überlastsicherheitseinrichtung und das Bodenbearbeitungswerkzeug derart angeordnet und ausgestaltet sind, dass auch in der oberen Ausweichstellung des Bodenbearbeitungswerkzeuges dieses sich unterhalb der Ebene des Traggestelles befindet.

Weitere Einzelheiten der Erfindung sind den übrigen Unteransprüchen, der Beispielsbeschreibung und den Zeichnungen zu entnehmen. Hierbei zeigen
- Fig. 1: die Anordnung der Bodenbearbeitungswerkzeuge an dem Seitenrahmen eines als Grubber ausgebildeten landwirtschaftlichen Bodenbearbeitungsgerätes in der Draufsicht,
- Fig. 2: das Bodenbearbeitungswerkzeug in perspektivischer Darstellung,
- Fig. 3: das Bodenbearbeitungswerkzeug in Seitenansicht,
- Fig. 4: das Bodenbearbeitungswerkzeug in perspektivischer Darstellung in der Ansicht von rechts vom,
- Fig. 5: das Bodenbearbeitungswerkzeug in der Ansicht von vorne,
- Fig. 6: das Bodenbearbeitungswerkzeug in perspektivischer Darstellung und in Explosionsdarstellung,
- Fig. 7: das Bodenbearbeitungswerkzeug in Seitenansicht in nach hinten ausgelenkter Stellung,
- Fig. 8: das Bodenbearbeitungswerkzeug gemäß Fig. 7 in der Ansicht von hinten,
- Fig. 9: das Bodenbearbeitungswerkzeug gemäß Fig. 7 in der Draufsicht,
- Fig. 10: das Bodenbearbeitungswerkzeug in seitlich ausgelenkter Stellung in Seitenansicht,
- Fig. 11: das Bodenbearbeitungswerkzeug gemäß Fig. 10 in der Ansicht von hinten,
- Fig. 12: das Bodenbearbeitungswerkzeug gemäß Fig. 10 in der Draufsicht,
- Fig. 13: das Bodenbearbeitungswerkzeug in seitlicher und nach hinten ausgelenkter Stellung in Seitenansicht,
- Fig. 14: das Bodenbearbeitungswerkzeug nach Fig. 13 in der Ansicht von hinten,
- Fig. 15: das Bodenbearbeitungswerkzeug gemäß Fig. 13 in der Draufsicht,
- Fig. 16: ein weiteres Bodenbearbeitungswerkzeug, welches an dem Tragrahmen eines Grubbers anbringbar ist, in perspektivischer Darstellung,
- Fig. 17: das Bodenbearbeitungswerkzeug gemäß Fig. 16 in der Ansicht von hinten und
- Fig. 18: das Bodenbearbeitungswerkzeug gemäß Fig. 16 in perspektivischer Darstellung, jedoch in nach hinten ausgelenkter Stellung.

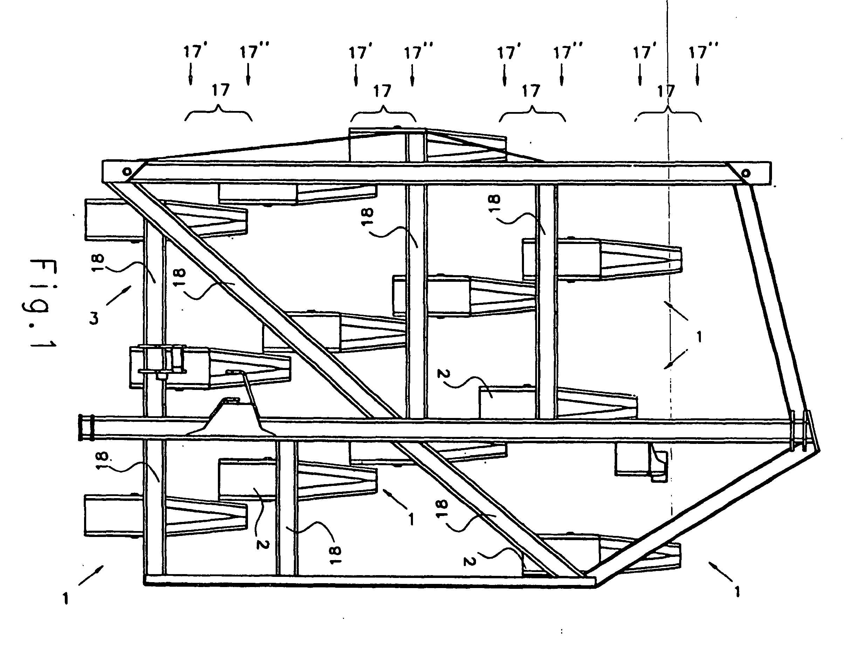

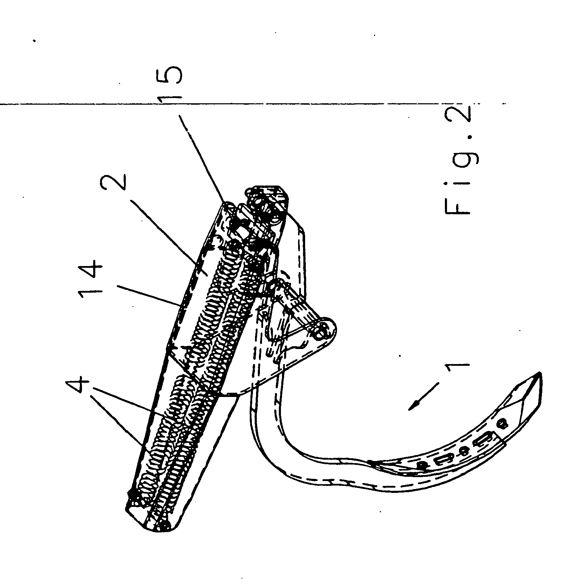

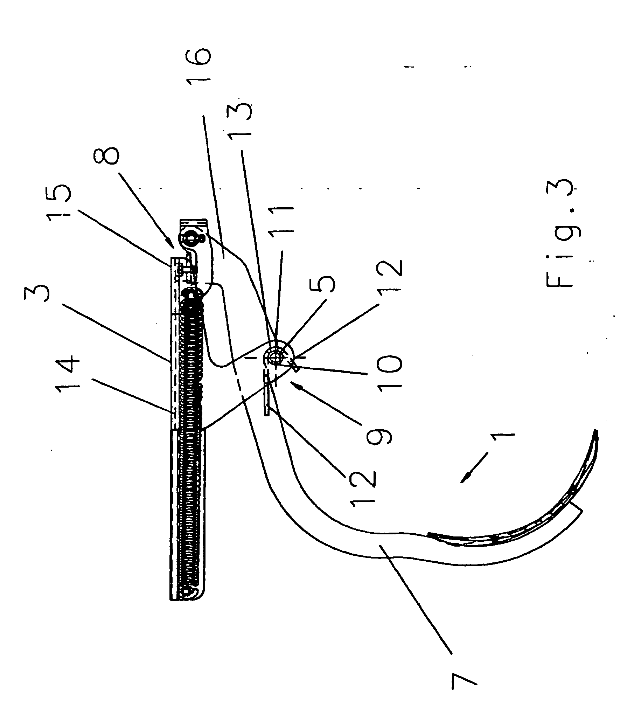

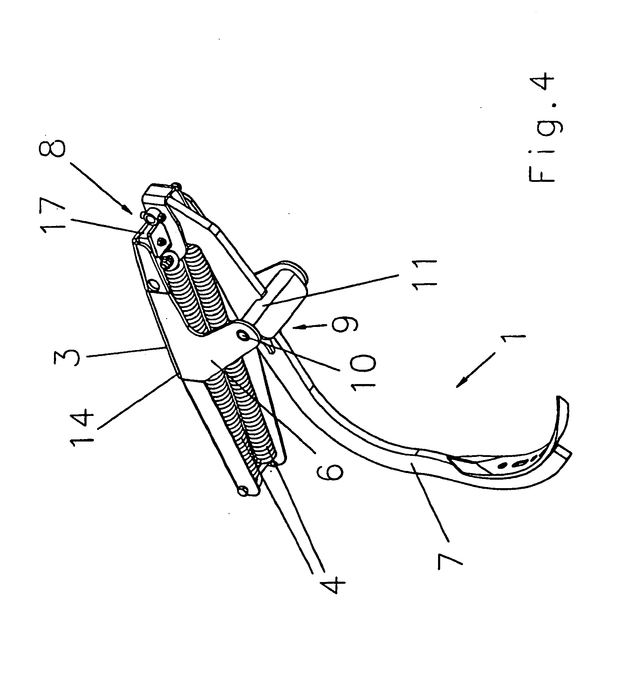

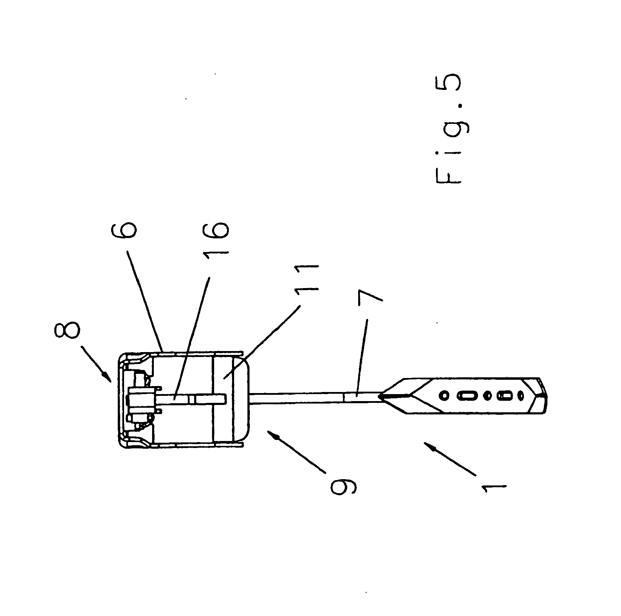

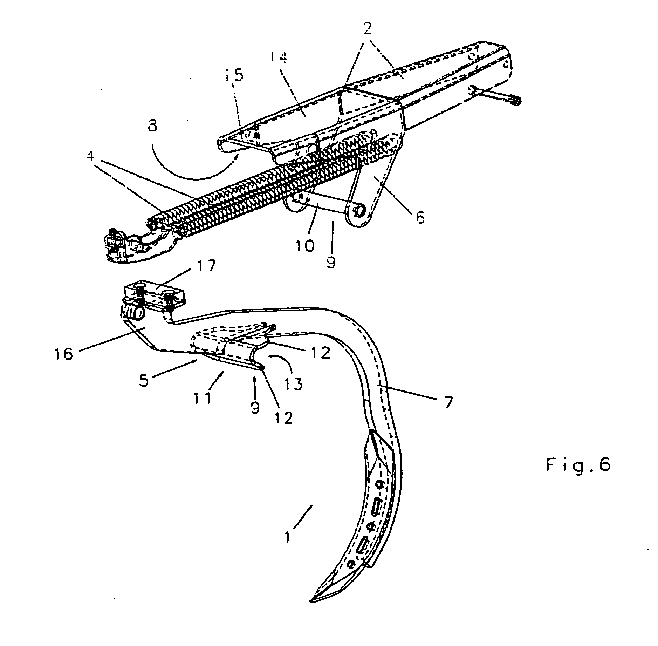

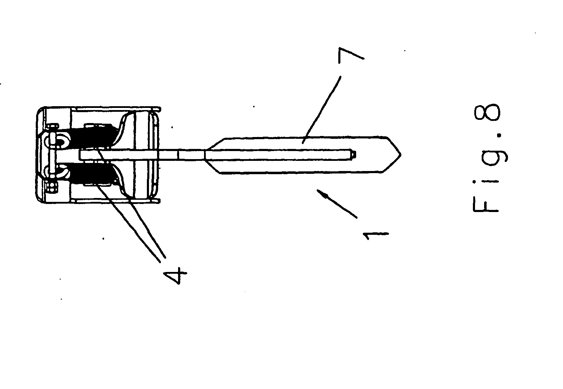

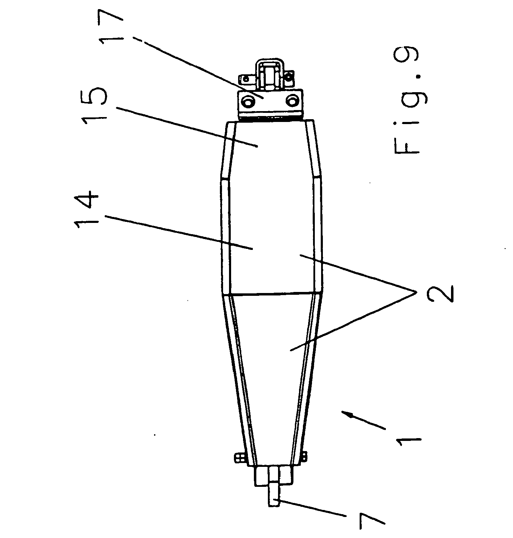

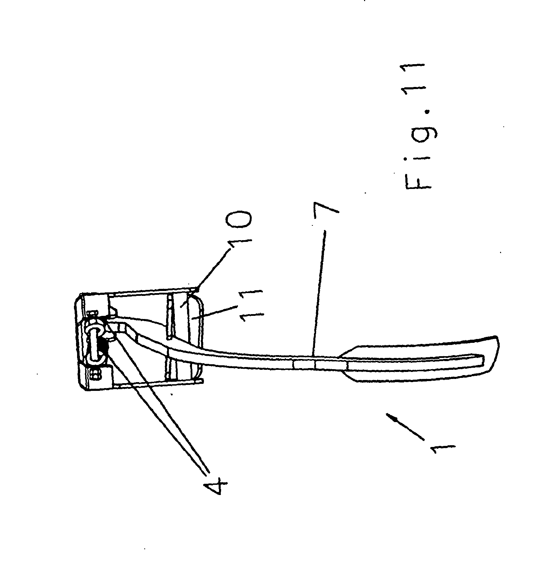

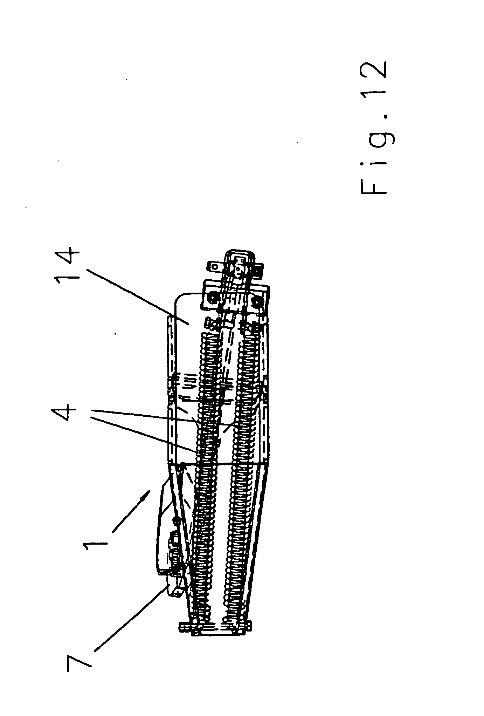

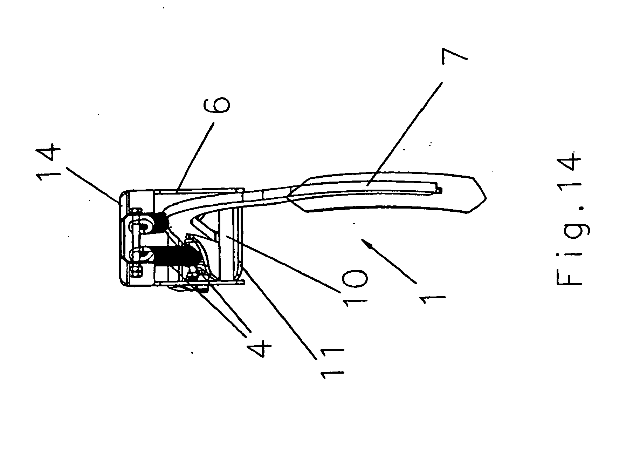

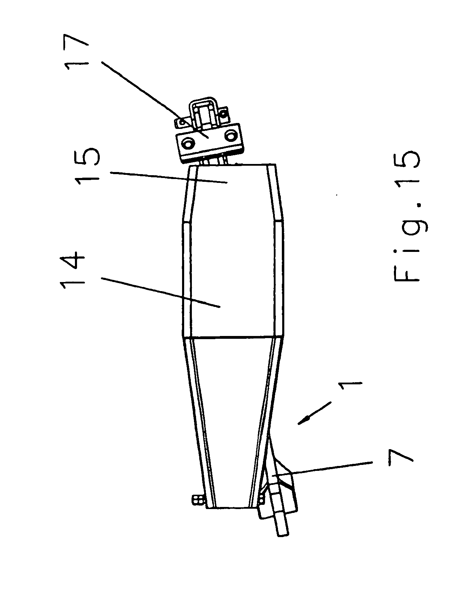

Bodenbearbeitungswerkzeuge 1, die als Grubberzinken ausgebildet sind, sind mit ihrer Befestigungsbereich 2 an dem Traggestell 3 eines landwirtschaftlichen Gerätes, welches im Ausführungsbeispiel als Grubber ausgebildetes Bodenbearbeitungsgerät ist, von dem in Fig. 1 ein Seitenrahmen dargestellt ist, angeordnet. Das Bodenbearbeitungswerkzeug 1 weist das aus zwei durch die Zugfedern 4 aufgebrachte Federbelastung zusammengehaltenen und sich gegenseitig abstützenden Gelenkteile 5 und 6 auf. Das eine Gelenkteil 5 trägt das als Grubberzinken 7 ausgebildete Bodenbearbeitungswerkzeug, während das andere Gelenkteil 6 über den Befestigungsbereich 2 am Traggestell 3 befestigt ist. Die beiden Gelenkteile 5 und 6 weisen eine obere Abstützanordnung 8 und eine untere Abstützanordnung 9 auf, wobei die obere 8 und untere Abstützanordnung 9 in einem Abstand zueinander angeordnet sind. Die untere Abstützanordnung 9 weist den Gelenkbolzen 10, der sich quer zur Fahrtrichtung erstreckt auf, der an dem Traggestell 3 angeordneten Gelenkteil 6 angeordnet ist. Während das andere Gelenkteil 5 die sich auf dem Gelenkbolzen 10 abstützende und im Querschnitt V- oder U-förmige Gelenkaufnahme 11 aufweist. Gemäß des Ausführungsbeispiels nach den Fig. 2-15 erstreckt sich die U-förmige bzw. V-förmige Gelenkaufnahme 11 über die gesamte Länge des Gelenkbolzens 10. Die V- oder U-förmige Gelenkaufnahme 11 weist zwei trichterförmig zueinander angeordnete Gelenklagerflächen 12 mit einem an den Gelenkbolzen 10 angepassten runden Schwenklagerbereich 13 auf, wie Fig. 3 uns 6 zeigen.

Das obere Gelenkteil 6 weist die Halterung 14 mit dem sich horizontal erstreckenden Befestigungsbereich 2 zur Befestigung des Bodenbearbeitungswerkzeuges 1 in dem Traggestell 3 auf. Des weiteren dient die Halterung 14 in ihrem vorderen Bereich 15 im Zusammenwirken mit dem sich von der V- oder U-förmigen Gelenkaufnahme 11 nach vorn-oben erstreckenden Halteteil 16 als obere Abstützanordnung 8. Die obere Abstützanordnung 8 weist in ihrem Abstützbereich gegenüber dem Halter 14 an dem an der U- oder V-förmigen Gelenkaufnahme angeordneten Haltteil 16 das aus Polyurethan oder Gummi hergestellte Dämpfungselement 17 auf, welches sich im vorderen Bereich 15 des Halters 14 abstützt. An dem vorderen oberen Ende der Halterung 14 greift die Federanordnung 4 an, die auf ihrer Rückseite am hinteren Ende der Halterung 16 befestigt ist. Durch die Federanordnung 4 werden die beiden Gelenkteile 5 und 6 zusammen gehalten.

Somit ist an der Halterung 14 die Abstützanordnung mit dem Bodenbearbeitungswerkzeug 7 und die Federkraft erzeugende Federeinrichtung 4 angeordnet. Der Befestigungsbereich 2 der Halterung 14 erstreckt sich in Fahrtrichtung über eine größere Länge als in seiner Querrichtung.

Wie die Fig. 1 zeigt, sind die Bodenbearbeitungswerkzeuge 1 in vier hintereinander liegenden Querreihen 17 angeordnet, wobei die Bodenbearbeitungswerkzeuge 1 in jeder Querreihe 17 gestaffelt in Zwischenquerreihen 17' und 17" angeordnet sind. Diese Anordnung in Zwischenquerreihen 17' und 17" in einer Querreihe 17 wird dadurch erreicht, dass die Bodenbearbeitungswerkzeuge 1 mit ihrem Befestigungsbereich 2 in unterschiedlicher Weise an den Balken 18 des Traggestelles 3 angeordnet sind, wie Fig. 1 zeigt. Die Überlastsicherheitseinrichtung, die durch die Gelenkanordnung 5, 6 und die Feder 4 gebildet wird, ist mit der gesamten Überlastsicherheitseinrichtung mit Bodenbearbeitungswerkzeugen 1, 7 und Gelenkteilen 5, 6 unterhalb des Traggestelles 3 angeordnet. Hierbei sind die Überlastsicherheitseinrichtung 4, 5, 6 und das Bodenbearbeitungswerkzeug 1, 7 derart angeordnet und ausgestaltet, dass auch in der oberen Ausweichstellung des Bodenbearbeitungswerkzeuges 1, 7 dieses sich unterhalb der Ebene des Traggestelles 3 befindet. Aufgrund der Ausgestaltung der Überlastsicherheitseinrichtung 4, 5 6, die durch die Federanordnung 4 und durch die Gelenkbolzen 10 und der V- oder U-förmigen Gelenkaufnahme 11 gebildet wird, kann das Bodenbearbeitungswerkzeug 1, 7 nach hinten und seitlich ausweichen. Die Zuordnung des Gelenkbolzens 10 und der im Querschnitt V- oder U-förmigen Gelenkaufnahme 11 ist, wie die Fig. 2 bis 15 zeigen, so ausgebildet, dass die V- oder U-förmige Gelenkaufnahme 11 nach hinten offen ist und mit ihrer Gelenkaufnahme 11 auf der Vorderseite des Gelenkbolzens 10 anliegt, so dass die durch den Bodeneingriff des Bodenbearbeitungswerkzeuges 1 auf den Grubberzinken 7 einwirkende Kraft direkt über die V-förmige Gelenkaufnahme 11 in den Gelenkbolzen 10 der Halterung 14 eingeleitet wird. Die Federanordnung 4 zieht das Bodenbearbeitungswerkzeug 1 in die in Fig. 2 bis 6 dargestellte Arbeitsposition, wobei das obere Ende des Halters 16 mit dem Dämpfungselement 17 an dem Halteelement 14 zur Anlage kommt.

An dieser Stelle sei darauf hingewiesen, dass es auch möglich ist, den Gelenkbolzen 10 zwischen dem Grubberzinken 7 und dem Halteteil 16 anzuordnen und die V- oder U-förmige Aufnahme 11 an dem Gelenkteil 6 anzuordnen, wobei dann die V- oder U-förmige Aufnahme 11 nach vorn offen ist, so dass der Gelenkbolzen in der V- oder U-förmigen Aufnahme entsprechend zur Auflage kommt.

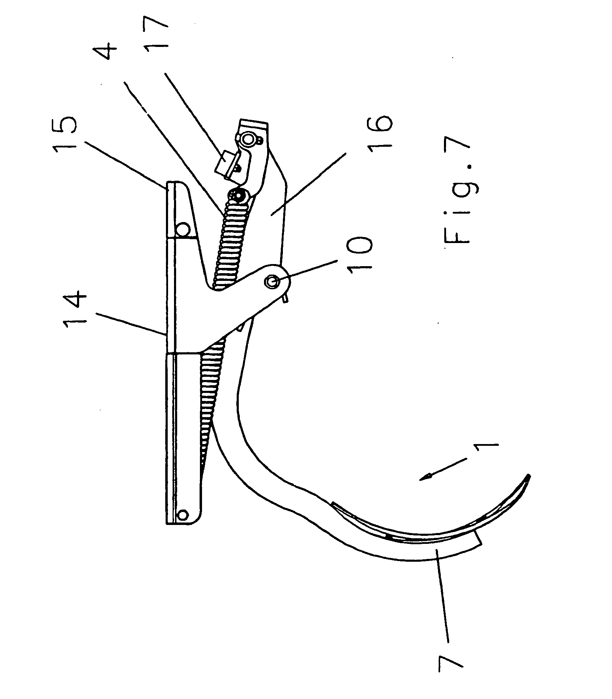

Trifft das Bodenbearbeitungswerkzeug 1, 7 mit seinem unteren Bereich auf sich im Boden befindliche Hindernisse, wobei die Kraft ausschließlich von vorne kommt und keine seitlichen Kräfte wirken, so schwenkt das Bodenbearbeitungswerkzeug 1, 7 um die Gelenkachse des Gelenkbolzens 10 nach hinten oben, wie Fig. 7-9 zeigen. Nach überwinden des Hindernisses schnellt die Zinkenspitze des Bodenbearbeitungswerkzeuges 1, 7 aufgrund der von der Feder 4 ausgeübten Kraft nach vorn und die in Fig. 2 bis 6 dargestellte Arbeitsposition. Hierbei dämpft das Dämpfungselement 17 das Bodenbearbeitungswerkzeug 1, 7 ab.

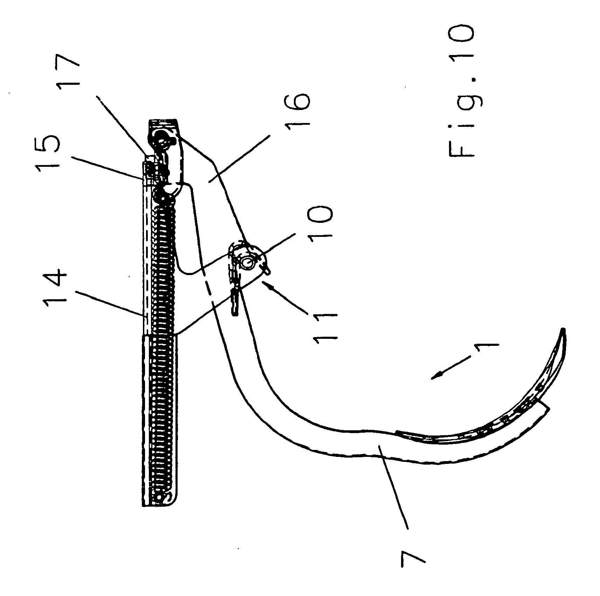

Trifft der untere Bereich des Bodenbearbeitungswerkzeuges 1, 7 seitlich auf ein im Boden befindliches Hindernis, wo die Kraft ausschließlich seitlich wirkt, so weicht der Zinken 1, 7 seitlich aus, wie Fig. 10-12 zeigen. Hierbei hebt die V- oder U-förmig Gelenkaufnahme 11 einseitig von dem Gelenkbolzen 10 ab und das Bodenbearbeitungswerkzeug 1, 7 schwenkt zur Seite. Nach dem Überwinden bzw. passieren des Hindernisses schwenkt das Bodenbearbeitungswerkzeug 1, 7 wieder in die in Fig. 2-6 dargestellte Arbeitsstellung zurück.

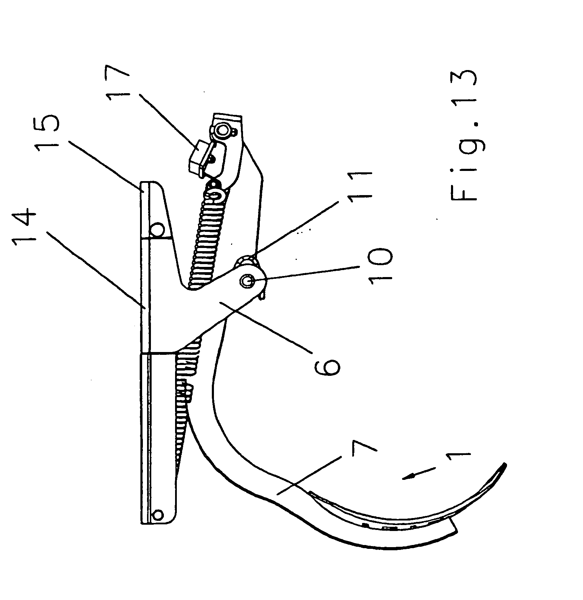

Wenn das Bodenbearbeitungswerkzeug 1, 7 derart auf ein sich im Boden befindliches Hindernis auftrifft, dass sowohl Kräfte von vorne wie von der Seite wirken, so schwenkt das Bodenbearbeitungswerkzeug 1, 7 gleichzeitig zur Seite und nach hinten oben aus, wie Fig. 13-15 zeigen. Hierbei hebt die V- oder U-förmige Gelenkaufnahme 11 einseitig von dem Gelenkbolzen 10 ab und gleichzeitig schwenkt das Bodenbearbeitungswerkzeug 1, 7 um die durch die Gelenkbolzen 10 verlaufenden Gelenkachse nach hinten, so dass sich eine kombinierte seitwärts nach hinten verlaufende Bewegung der Zinkenspitze des Bodenbearbeitungswerkzeuges 1, 7 ergibt. Nach Überwinden und passieren des Hindernisses schwenkt das Bodenbearbeiturigswerkzeug 1, 7 wieder federnd in die in den Fig. 2-6 dargestellte Position aufgrund der von der Federanordnung ausgeübten Kraft zurück.

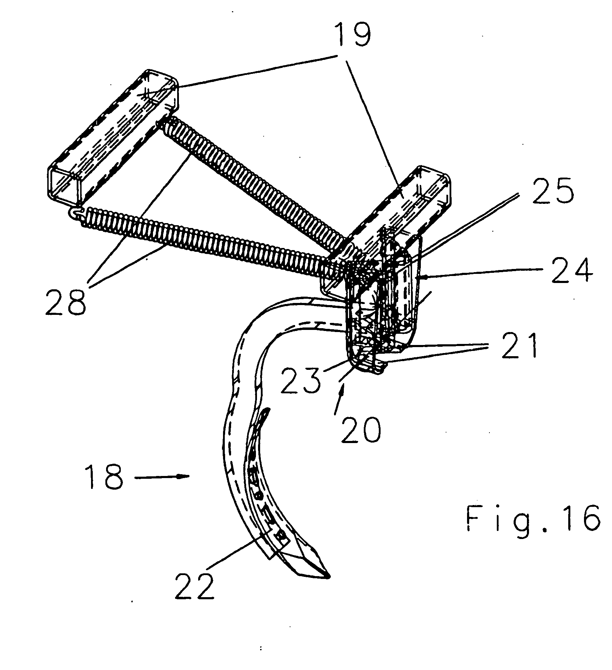

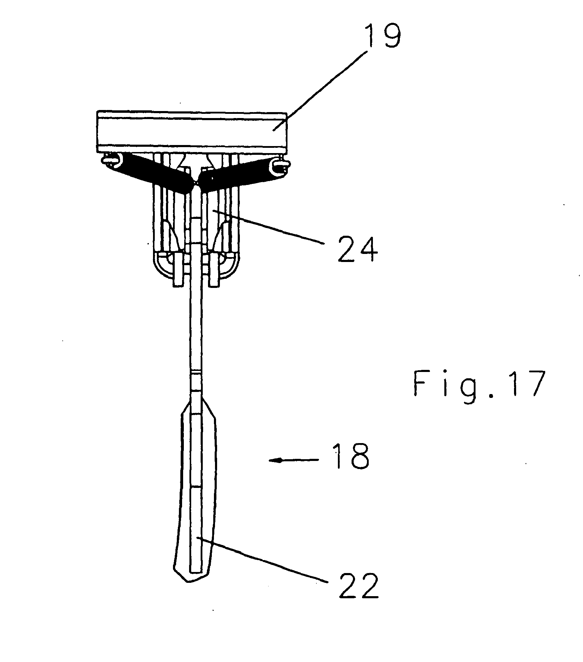

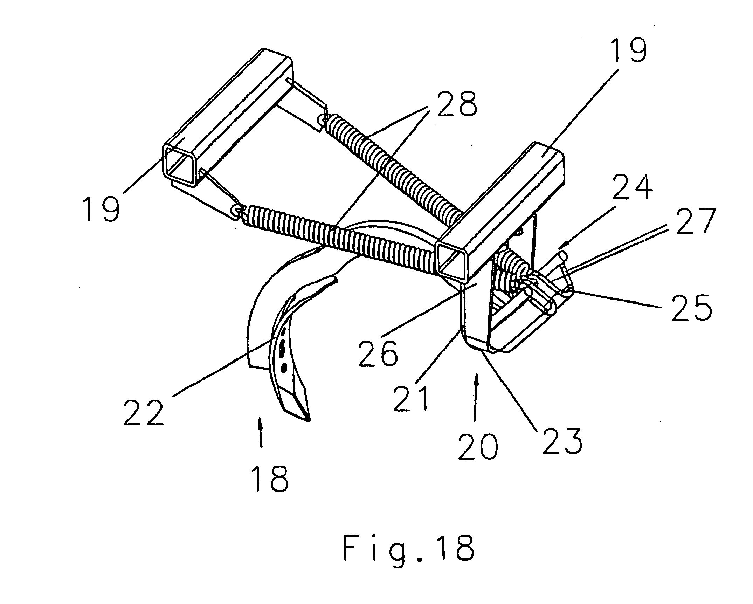

Die Fig. 16-18 zeigen eine weitere Gelenkanordnung und Überlastsicherungseinrichtung für ein Bodenbearbeitungswerkzeug 18, welches ebenfalls als Grubberzinken ausgebildet ist. An das Traggestell 19 ist die untere Gelenkaufnahme 20 angeordnet, welches zwei beabstandet zueinander angeordnete und gabelförmig ausgebildete Aufnahmen 21 aufweist, die nach vom offen sind. Diese beiden gabelförmigen Aufnahmen 21 sind beabstandet zueinander angeordnet. An dem Zinken 22 des Bodenbearbeitungswerkzeuges 18 ist ein Gelenkbolzen 23 angeordnet, der in diesen gabelförmigen Aufnahmen 21 liegt. Die Gelenkaufnahme 20 mit den gabelförmigen Aufnahmen 21 ist einem Traggestell 19 zugeordnet, während der Gelenkbolzen 23 an den dem Bodenbearbeitungswerkzeug 22 zugeordneten Gelenkteilen angeordnet ist. Die obere Abstützanordnung 24 der Überlastsicherungseinrichtung weist die beiden sich in senkrechter Richtung erstreckenden und mit einer entsprechend ausgeformten Ausnehmung 25 zusammenwirkenden V- und U-förmigen Erhebungen 26 auf. Die V- oder U-förmigen Erhebungen 26 sind an dem an dem Traggestell 19 angeordneten Gelenkteil angeordnet, während an dem Gelenkteil, welches dem Bodenbearbeitungswerkzeug 22 zugeordnet ist, V- und U-förmige Gelenkaufnahmen 25, die die trichterförmig zueinander angeordneten Flächen 27 aufweisen, ausgebildet ist. An dem dem Gelenkbolzen 23 und dem dem Bodenbearbeitungswerkzeug 22 zugeordneten V- oder U-förmigen Gelenkteil 25 ist an deren oberen Enden die Federanordnung 28 angeordnet, welche die sich gegenseitig abstützende Gelenkteile zusammenhält. Auch diese Gelenkanordnung stellt sicher, dass das Bodenbearbeitungswerkzeug 18, 22 sowohl nach hinten, wie auch seitlich oder seitlich und nach hinten oben ausweichen kann, wie in Fig. 18 angedeutet ist.

## Patentansprüche

1. Überlastsicherheitseinrichtung für landwirtschaftliche Geräte, wie beispielsweise Bodenbearbeitungsgeräte mit einem das Bodenbearbeitungswerkzeug mit dem Traggestell verbindenden Gelenk, das aus zwei durch Federbelastung zusammengehaltenen und sich gegenseitig abstützenden Gelenkteilen besteht, von denen das eine am Bodenbearbeitungswerkzeug und das andere am Traggestell befestigt ist, wobei an beiden Gelenkteilen zumindest eine obere Abstützanordnung und zumindest eine untere Abstützanordnungen im Abstand zueinander angeordnet sind, **dadurch gekennzeichnet, dass** die untere Abstützanordnung (9, 20) zumindest einen sich horizontal und quer zur Arbeitsrichtung erstreckenden Gelenkbolzen (10, 23) und zumindest eine sich auf dem Gelenkbolzen (10, 23) abstützende und im Querschnitt V- oder U-förmige Gelenkaufnahme (11) aufweist.

2. Überlastsicherheitseinrichtung nach Anspruch 1, **dadurch gekennzeichnet, dass** die V- oder U-förmige Gelenkaufnahme (11) sich über die Länge des Gelenkbolzens (10) erstreckt.

3. Überlastsicherheitseinrichtung nach Anspruch 1, **dadurch gekennzeichnet, dass** die V- oder U-förmige Gelenkaufnahme (11) zwei trichterförmig zueinander angeordnete Gelenklagerflächen (12) mit einem an den Gelenkbolzen (10) angepasst gerundete Schwenklagerflächen (13) aufweist.

4. Überlastsicherheitseinrichtung nach Anspruch 1, **dadurch gekennzeichnet, dass** die V- oder U-förmige Gelenkaufnahme (11) zwei beabstandet zueinander angeordnete sich auf dem Gelenkbolzen (23) abstützende gabelförmige Elemente (21) aufweist.

5. Überlastsicherheitseinrichtung nach Anspruch 1, **dadurch gekennzeichnet, dass** die Gelenkaufnahme (11) der unteren Abstützung (9, 20) als nach vom oder hinten offene gabelförmige Aufnahmen (12, 21) ausgebildet sind.

6. Überlastsicherheitseinrichtung nach Anspruch 1, **dadurch gekennzeichnet, dass** die Gelenkaufnahme (11) dem am Traggestell (2) angeordneten Gelenkteil (6) und der Gelenkbolzen (10) dem am Bodenbearbeitungswerkzeug (1, 7) angeordneten Gelenkteil (5) zugeordnet ist.

7. Überlastsicherheitseinrichtung nach Anspruch 1, **dadurch gekennzeichnet, dass** die Gelenkaufnahme dem am Bodenbearbeitungswerkzeug zugeordneten Gelenkteil und der Gelenkbolzen dem am Traggestell angeordneten Gelenkteil zugeordnet ist.

8. Überlastsicherheitseinrichtung nach Anspruch 1, **dadurch gekennzeichnet, dass** die obere Abstützanordnung (24) zumindest eine sich in senkrechter Richtung erstreckende und mit einer entsprechend ausgeformten Ausnehmung (25) zusammenwirkende V- oder U-förmige Erhebung (26) aufweist.

9. Überlastsicherheitseinrichtung nach Anspruch 8, **dadurch gekennzeichnet, dass** die Erhebung (26) an dem am Traggestell (19) angeordneten Gelenkteil und die Ausnehmung (25) an dem am Bodenbearbeitungsgerät (19) angeordneten Gelenkteil zugeordnet ist.

10. Überlastsicherheitseinrichtung nach Anspruch 8, **dadurch gekennzeichnet, dass** die Erhebung dem am Bodenbearbeitungswerkzeug angeordneten Gelenkteil und die Ausnehmung dem am Traggestell angeordneten Gelenkteil zugeordnet ist.

11. Überlastsicherheitseinrichtung nach Anspruch 1, **dadurch gekennzeichnet, dass** zwischen dem Traggestell (2, 19) und der oberen Abstützanordnung (8, 24) die die Federbelastung erzeugende Federanordnung (4, 28) angeordnet ist.

12. Überlastsicherheitseinrichtung nach einem oder mehreren der vorstehenden Ansprüche, **dadurch gekennzeichnet, dass** jeweils seitlich der Erhebung eine Feder (28) an der oberen Abstützanordnung (24) angreift.

13. Überlastsicherheitseinrichtung nach Anspruch 1, **dadurch gekennzeichnet, dass** die Gelenkaufnahmen langlochähnlich ausgebildet sind.

14. Überlastsicherheitseinrichtung nach Anspruch 14, **dadurch gekennzeichnet, dass** die Längserstreckung der langlochähnlichen Aufnahme zumindest dem 2-fachen Durchmesser des Gelenkbolzens entspricht.

15. Überlastsicherungseinrichtung nach einem oder mehreren der vorstehenden Ansprüche, **dadurch gekennzeichnet, dass** der oberen Abstützanordnung (8) zumindest ein Dämpfungselement (17) zugeordnet ist.

16. Überlastsicherheitseinrichtung nach Anspruch 14, **dadurch gekennzeichnet, dass** das Dämpfungselement (17) als elastische Platte, beispielsweise aus Polyurethan oder Gummi bestehend ausgebildet ist.

17. Überlastsicherung nach einem oder mehreren der vorstehenden Ansprüche, **dadurch gekennzeichnet, dass** die Überlastsicherheitseinrichtung ein am Traggestell anordbares und ein von seiner zumindest annähernd horizontalen Oberseite gebildeten Befestigungsbereich (3) aufweisendes Halterungselement (14) aufweist, dass an dem Halterungselement (14) die Abstützanordnungen (8, 9) mit dem Bodenbearbeitungswerkzeug (1, 7) und die Federlast erzeugende Federeinrichtung (4) angeordnet ist.

18. Überlastsicherungseinrichtung nach einem oder mehreren der vorstehenden Ansprüche, **dadurch gekennzeichnet, dass** der Befestigungsbereich (3) des Halterungselementes (14) sich in Fahrtrichtung über eine größere Länge als in Querrichtung erstreckt.

19. Überlastsicherungseinrichtung nach einem oder mehreren der vorstehenden Ansprüche, **dadurch gekennzeichnet, dass** das Halterungselement (14) mehrere hintereinander liegende Befestigungsbereiche aufweist.

20. Überlastsicherungseinrichtung nach einem oder mehreren der vorstehenden Ansprüche, **dadurch gekennzeichnet, dass** das am Traggestell (19) angeordnete Gelenkteil und die die Federlast erzeugende Federeinrichtung (28) direkt am Traggestell (19) angeordnet sind.

21. Überlastsicherungseinrichtung nach einem oder mehreren der vorstehenden Ansprüche, **dadurch gekennzeichnet, dass** die gesamte Überlastsicherheitseinrichtung mit Bodenbearbeitungswerkzeug (7) und Gelenkteilen (5, 6) unterhalb des Traggestelles (2) angeordnet ist.

22. Überlastsicherheitseinrichtung nach Anspruch 21, **dadurch gekennzeichnet, dass** die Überlastsicherheitseinrichtung und das Bodenbearbeitungswerkzeug (1, 7) derart angeordnet und ausgestaltet sind, dass auch in der oberen Ausweichstellung des Bodenbearbeitungswerkzeuges (7) dieses sich unterhalb der Ebene des Traggestelles (2) befindet.

## Claims

1. Overload protection device for agricultural devices, such as, for example, ground cultivating devices, the said overload protection device having a pivot joint that connects the ground cultivating tool to the support frame, the said pivot joint comprising two pivot joint parts that are held together by means of spring loading and are mutually supported, the one pivot joint part being secured to the ground cultivating tool and the other pivot joint part being secured to the support frame, wherein on each of the pivot joint parts at least one upper supporting arrangement and at least one lower supporting arrangement are disposed at a spacing from one another, **characterised in that** the lower supporting arrangement (9, 20) includes at least one pivot pin (10, 23) that extends horizontally and transversely relative to the operating direction and at least one pivot joint accommodating means (11), which is supported on the pivot pin (10, 23) and is V-shaped or U-shaped in cross-section.

2. Overload protection device according to claim 1, **characterised in that** the V-shaped or U-shaped pivot joint accommodating means (11) extends over the length of the pivot pin (10).

3. Overload protection device according to claim 1, **characterised in that** the V-shaped or U-shaped pivot joint accommodating means (11) includes two pivot joint bearing faces (21) that are disposed one relative to the other in the shape of a funnel with a rounded pivotal bearing face (13) that is adapted to the pivot pin (10).

4. Overload protection device according to claim 1, **characterised in that** the V-shaped or U-shaped pivot joint accommodating means (11) includes two fork-shaped elements (21), which are disposed at a spacing one from the other supported on the pivot pin (23).

5. Overload protection device according to claim 1, **characterised in that** the pivot joint accommodating means (11) of the lower support arrangement (9, 20) are in the form of fork-shaped accommodating means (12, 21) that are open to the front or to the back.

6. Overload protection device according to claim 1, **characterised in that** the pivot pin accommodating means (11) is associated with the pivot joint part (6) that is disposed on the support frame (2) and the pivot pin (10) is associated with the pivot joint part (5) that is disposed on the ground cultivating tool (1, 7).

7. Overload protection device according to claim 1, **characterised in that** the pivot pin accommodating means is associated with the pivot joint part that is disposed on the ground cultivating tool and the pivot jointpin is associated with the pivot joint part that is disposed on the support frame.

8. Overload protection device according to claim 1, **characterised in that** the upper support arrangement (24) includes at least one V-shaped or U-shaped elevation (26) that extends in the vertical direction and interacts with a correspondingly formed recess (25).

9. Overload protection device according to claim 8, **characterised in that** the elevation (26) is associated with the pivot joint part that is disposed on the support frame (19) and the recess (25) is associated with the pivot joint part that is disposed on the ground cultivating tool (19).

10. Overload protection device according to claim 8, **characterised in that** the elevation is associated with the pivot joint part that is disposed on the ground cultivating tool and the recess is associated with the pivot joint part that is disposed on the support frame.

11. Overload protection device according to claim 1, **characterised in that** the spring arrangement (4, 28) that generates the spring loading is disposed between the support frame (2, 19) and the upper support arrangement (8, 24).

12. Overload protection device according to one or several of the preceding claims, **characterised in that** in each case a spring (28) engages the upper support arrangement (24) to the side of the elevation (28).

13. Overload protection device according to claim 1, **characterised in that** pivot joint accommodating means are slot-like.

14. Overload protection device according to claim 14, **characterised in that** the longitudinal extension of the slot-like accommodating means corresponds to at least twice the diameter of the pivot pin.

15. Overload protection device according to one or several of the preceding claims, **characterised in that** at least one damping element (17) is associated with the upper support arrangement (8).

16. Overload protection device according to claim 14, **characterised in that** the damping element (17) is in the form of a flexible plate, for example made from polyurethane or rubber.

17. Overload protection according to one or several of the preceding claims, **characterised in that** the overload protection device includes a mounting element (14) that can be disposed on the support frame and includes a securing region (3) that is formed by its at least approximately horizontal top side, **in that** the support arrangements (8, 9) with the ground cultivating tool (1, 7) and the spring device (4) that generates the spring loading are disposed on the mounting element (14).

18. Overload protection device according to one or several of the preceding claims, **characterised in that** the securing region (3) of the mounting element (14) extends in the direction of travel over a greater length than in the transverse direction.

19. Overload protection device according to one or several of the preceding claims, **characterised in that** the mounting element (14) includes a plurality of securing regions that are situated one behind the other.

20. Overload protection device according to one or several of the preceding claims, **characterised in that** the pivot joint part that is disposed on the support frame (19) and the spring device (28) that generates the spring loading are disposed directly on the support frame (19).

21. Overload protection device according to one or several of the preceding claims, **characterised in that** the entire overload protection device with ground cultivating tool (7) and pivot joint parts (5, 6) is disposed underneath the support frame (2).

22. Overload protection device according to claim 21, **characterised in that** the overload protection device and the ground cultivating tool (1, 7) are disposed and developed in such a manner that even with the ground cultivating tool (7) in the upper deflection position, the said ground cultivating tool is situated below the plane of the support frame (2).

## Revendications

1. Installation de protection anti-surcharge pour des machines agricoles telles que par exemple des appareils pour le travail du sol ayant une articulation reliée au châssis pour l'outil pour le travail du sol, cette articulation se composant de deux parties d'articulation maintenues réunies et appuyées l'une contre l'autre par des ressorts, l'une des parties d'articulation étant fixée à l'outil et l'autre au châssis, les deux parties d'articulation ayant au moins un dispositif d'appui supérieur et au moins un dispositif d'appui inférieur, écartés l'un de l'autre,
**caractérisée en ce que**
le dispositif d'appui inférieur (9, 20) comporte un axe d'articulation (10, 23) horizontal, transversal à la direction de travail et au moins un logement d'articulation (11) à section en forme de V ou de U, et s'appuyant sur l'axe d'articulation (10, 23).

2. Installation de sécurité anti-surcharge selon la revendication 1;
**caractérisée en ce que**
le logement d'articulation (11) à section en forme de V ou de U s'étend sur toute la longueur du goujon d'articulation (10).

3. Installation de sécurité anti-surcharge selon la revendication 1,
**caractérisée en ce que**
le logement d'articulation (11) à section en forme de V ou de U comporte deux surfaces d'appui complémentaires (12) disposées en forme entonnoir, avec les surfaces de palier de pivotement (13) arrondies, adaptées au goujon d'articulation (10).

4. Installation de sécurité anti-surcharge selon la revendication 1,
**caractérisée en ce que**
le logement d'articulation à section en forme de V ou de U (11) comporte deux éléments en forme de fourche (21), écartés l'un de l'autre et s'appuyant l'un et l'autre sur le goujon d'articulation (23).

5. Installation de sécurité anti-surcharge selon la revendication 1,
**caractérisée en ce que**
les logements d'articulation (11) de l'appui inférieur (9, 20) sont réalisés sous la forme de logements (12, 21) en forme de fourche ouverts à l'avant ou à l'arrière.

6. Installation de sécurité anti-surcharge selon la revendication 1,
**caractérisée en ce que**
le logement d'articulation (11) est associé à la partie d'articulation (6) du châssis (2) et le goujon d'articulation (10) est associé à la partie d'articulation (5) correspondant à l'outil (1, 7).

7. Installation de sécurité anti-surcharge selon la revendication 1,
**caractérisée en ce que**
le logement d'articulation est associé à la partie d'articulation de l'outil pour le travail du sol et le goujon d'articulation est associé à la partie d'articulation du châssis.

8. Installation de sécurité anti-surcharge selon la revendication 1,
**caractérisée en ce que**
le dispositif d'appui supérieur (24) comporte au moins un bossage en forme de V ou de U (26) s'étendant dans la direction verticale et coopérant avec une cavité (25) de forme correspondante.

9. Installation de sécurité anti-surcharge selon la revendication 8,
**caractérisée en ce que**
le bossage (26) est prévu sur la partie d'articulation associée au châssis (19) et la cavité (25) est prévue sur la partie d'articulation associée à l'appareil de travail du sol (19).

10. Installation de sécurité anti-surcharge selon la revendication 8,
**caractérisée en ce que**
le bossage est associé à la partie d'articulation de l'outil pour le travail du sol et la cavité est associée à la partie d'articulation du châssis.

11. Installation de sécurité anti-surcharge selon la revendication 1,
**caractérisée en ce que**
le dispositif à ressort (4, 28) générant la force de ressort est prévu entre le châssis (2, 19) et le dispositif d'appui supérieur (8, 24).

12. Installation de sécurité anti-surcharge selon l'une ou plusieurs des revendications précédentes,
**caractérisée en ce que**
un ressort du dispositif d'appui supérieur (24), respectif est relié latéralement au bossage.

13. Installation de sécurité anti-surcharge selon la revendication 1,
**caractérisée en ce que**
le logement d'articulation est en forme de trou oblong.

14. Installation de sécurité anti-surcharge selon la revendication 14,
**caractérisée en ce que**
l'extension longitudinale du logement en forme de trou oblong correspond à au moins deux fois le diamètre du goujon d'articulation.

15. Installation de sécurité anti-surcharge selon l'une ou plusieurs des revendications précédentes,
**caractérisée en ce que**
le dispositif d'appui supérieur (9) comporte au moins un élément amortisseur (17).

16. Installation de sécurité anti-surcharge selon la revendication 14,
**caractérisée en ce que**
l'élément amortisseur (17) est une plaque élastique par exemple en polyuréthane ou en caoutchouc.

17. Installation de sécurité anti-surcharge selon l'une ou plusieurs des revendications précédentes,
**caractérisée en ce que**
l'installation de sécurité anti-surcharge comporte un élément de support (14) fixé au châssis et ayant une zone de fixation (3) formée par un côté supérieur au moins sensiblement horizontal, et l'installation à ressort (4) qui génère la force de ressort ainsi que les dispositifs d'appui (8, 9) avec l'outil pour le travail du sol (1, 7) sont prévus sur l'élément de support (14).

18. Installation de sécurité anti-surcharge selon l'une ou plusieurs des revendications précédentes,
**caractérisée en ce que**
la zone de fixation (3) de l'élément de support (14) s'étend dans la direction de déplacement sur une longueur plus grande que dans la direction transversale.

19. Installation de sécurité anti-surcharge selon l'une ou plusieurs des revendications précédentes,
**caractérisée en ce que**
l'élément de support (14) comporte plusieurs zones de fixation situées l'une derrière l'autre.

20. Installation de sécurité anti-surcharge selon l'une ou plusieurs des revendications précédentes,
**caractérisée en ce que**
la partie d'articulation prévue sur le châssis (19) et l'installation de ressort (28) générant la force de ressort sont prévues directement sur le châssis (19).

21. Installation de sécurité anti-surcharge selon l'une ou plusieurs des revendications précédentes,
**caractérisée en ce que**
l'ensemble de l'installation de sécurité anti-surcharge avec l'outil pour le travail du sol (7) et la partie d'articulation (5, 6) se trouve en dessous du châssis (2).

22. Installation de sécurité anti-surcharge selon la revendication 21,
**caractérisée en ce que**
l'installation de protection anti-surcharge et l'outil pour le travail du sol (1, 7) sont disposés et réalisés pour qu'en position d'échappement supérieur de l'outil (7), l'outil reste en dessous du plan du châssis (2).
